Europäisches Patentamt

European Patent Office

Office européen des brevets

(19)

(11) Veröffentlichungsnummer: **0 004 893**
**B1**

(12) **EUROPÄISCHE PATENTSCHRIFT**

(45) Veröffentlichungstag der Patentschrift: **30.09.81**

(51) Int. Cl.³: **B 29 B 1/06,** B 29 D 27/02

(21) Anmeldenummer: **79100979.8**

(22) Anmeldetag: **02.04.79**

(54) **Mischkopf.**

(30) Priorität: **13.04.78 DE 2815944**

(43) Veröffentlichungstag der Anmeldung:
**31.10.79 Patentblatt 79/22**

(45) Bekanntmachung des Hinweises auf die Patenterteilung:
**30.09.81 Patentblatt 81/39**

(84) Benannte Vertragsstaaten:
**BE FR GB IT NL SE**

(56) Entgegenhaltungen:
**US - A - 3 849 074**
**US - A - 4 082 512**

(73) Patentinhaber: **Krauss-Maffei Aktiengesellschaft**
**Krauss-Maffei-Strasse 2**
**D-8000 München 50 (DE)**

(72) Erfinder: **Schlüter, Klaus, Dipl.-Ing.**
**Windeckstrasse 1c**
**D-8000 München 70 (DE)**

(74) Vertreter: **Schaa, Wolfgang, Dipl.-Ing. Krauss-**
**Maffei AG Patentabteilung / ZR 3**
**Krauss-Maffei-Strasse 2**
**D-8000 München 50 (DE)**

Courier Press, Leamington Spa, England.

## Mischkopf

Die Erfindung betrifft einen Mischkopf nach dem Oberbegriff des Anspruchs 1 (vgl.DE—PS 20 07 935). Bei derartigen rührwerkslosen, mit Hochdruck arbeitenden Mischköpfen muß dafür gesorgt werden, daß in der Nichtmischphase, d.h. dann, wenn die zum Mischkopf geförderten Kunststoffkomponenten aus diesem zum Sammelbehälter zurückgeführt werden, die Rückführung so erfolgt, daß im Mischkopf keinerlei Vermischung der Komponenten untereinander eintritt. Eine solche Vermischung führt nämlich zur Bildung des Kunststoffs und stellt im Bereich des Mischkopfs eine Verunreinigung des Mischkopfes dar.

Insbesondere dann, wenn mit Füllstoffen gearbeitet wird, d.h., wenn zwecks Einsparung der teueren Kunststoffkomponenten eine der üblicherweise zwei Komponenten mit einem Füllstoff wie Glasfaser, Kalk od.dgl., beladen ist und die füllstoffbeladene Komponente nicht nur über eine, sondern mehrere (z.B. drei) Eintrittsöffnungen in die Mischkammer (vgl. DE—Gbm 73 10 963) eintritt, tritt das oben angesprochene Dichtproblem auf, weil die Mischkammer, deren Durchmesser beispielsweise 10 mm beträgt, nicht nur zwei, sondern drei und mehr Eintrittsöffnungen auf gleicher Höhe aufweist, so daß die Überströmkanäle auf der Mantelfläche des Steuerkolbens dicht nebeneinander liegen und zwischen sich nur noch eine entsprechend kleine Dichtfläche haben.

Zur Lösung dieses Problems ist es aus der US—A—4 082 512 bekannt, den Steuerkolben mit einer Schicht aus hochelastischem Material zu umgeben, wobei dieses in ausgebautem Zustand einen größeren Durchmesser aufweist als die den Steuerkolben aufnehmende Bohrung. Aus der DE—PS 12 82 522 ist es bekannt, daß die den Steuerkolben aufnehmende Gehäusebohrung als Büchse aus hochelastischem Material mit Untermaß hergestellt ist. Beide Maßnahmen unterliegen dem Verschleiß beim Betrieb des Mischkopfes.

Zur nachhaltigen Lösung dieses Problems sind bereits zwischen den Überströmkanälen in Längsrichtung auf dem Steuerkolben angebrachte Dichtnuten bekannt (vgl. DE—PS 21 17 533), in die jeweils zwei Kunstoffkomponenten einfließen, miteinander reagieren, zu Kunststoff aushärten und somit eine Dichtmasse bilden.

Im Zuge der wachsenden Anforderungen an die Mischköpfe (z.B. größere Strömungsquerschnitte) stößt auch diese bekannte und sich voll bewährte Maßnahme an eine Grenze, und es ist Aufgabe der vorliegenden Erfindung, eine auf einem anderen Prinzip arbeitende Dichtung zwischen benachbarten Überströmnuten anzugeben.

Gelöst wird diese Aufgabe durch die im Anspruch 1 angegebene Maßnahme. Dabei wird der Innendurchmesser der Büchse mit üblichem Paßsitz hergestellt. Der Druck im Druckraum wirkt dann von außen auf die Büchse, und zwar im Sinne einer Durchmesserverkleinerung, was einen besonders dichten Sitz herbeiführt, und zwar unabhängig von Verschleißerscheinungen an den gegenseitig bewegten Teilen. Im Gegenteil kann der Verschleiß gemäß den Ansprüchen 2 und 4 herabgesetzt werden, während Anspruch 3 eine bevorzugte Ausführungsform der Büchse angibt.

Ein Ausführungsbeispiel der Erfindung wird anhand der Zeichnung erläutert. Es zeigen

Fig. 1 den Längsschnitt und

Fig. 2 einen Querschnitt nach der Linie II—II in Fig. 1 eines eine elastische, druckmittelbeaufschlagte Führungsbüchse aufweisenden Mischkopfes.

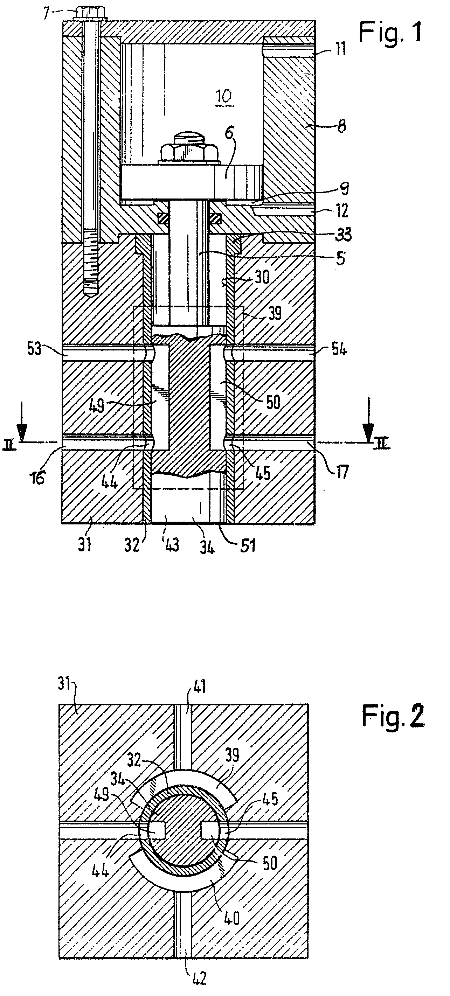

Der in den Fig. 1 und 2 dargestellte Mischkopf weist ein im Querschnitt quadratisches Gehäuse 31 auf, in das eine dünnwandige und somit leicht verformbare Büchse 32 aus Metall mit einem Bund 33 eingesetzt ist. In der mit normalem Paßmaß vorgesehenen Bohrung 30 der Büchse 32 ist ein Steuerkolben 34 angeordnet, der in der nicht dargestellten oberen Endlage eine Mischkammer 43 freigibt und über eine Kolbenstange 5 mit einem Arbeitskolben 6 verbunden ist. Dieser wird in einer Bohrung eines mit dem Gehäuse 31 mittels Schrauben 7 fest verbundenen Zylinders 8 geführt. Die beiden Zylinderräume 9 und 10 sind über Bohrungen 11 und 12 mit einer Druckmittelquelle verbindbar, so Daß der Arbeitskolben 6 und damit auch der Steuerkolben 34 in die untere und in die obere Endlage gebracht werden kann. In der oberen Endlage münden Zuführungsleitungen 16 und 17 für jede der beiden Kunststoffkomponenten durch Eintrittsöffnungen 44 und 45 in die Mischkammer 43. Unten weist die Mischkammer 43 eine Austrittsöffnung 51 für das Kunststoffkomponentengemisch auf.

Im Steuerkolben 34 sind zwei Überströmkanäle 49 und 50 so angeordnet, daß in der dargestellten unteren Endlage des Steuerkolbens 34 die Zuführungsleitungen 16 und 17 über die Überströmkanäle 49 und 50 mit zwei Rückführungsleitungen 53 und 54 verbunden sind. In dieser Endlage des Steuerkolbens 34 werden die Kunststoffkomponenten, die unter hohem Druck durch zwei Schläuche zum Mischkopf bis zu den Zuführungsleitungen 16 und 17 gelangen, über die Überströmkanäle 49 und 50 und die Rückführungsleitungen 53 und 54 wieder zu den jeweiligen Sammelbehältern zurückgefördert. Diese Komponenten werden somit stets in Bewegung gehalten.

Es handelt sich dabei beispielsweise um zwei Kunststoffkomponenten, von denen die eine mit Füllstoffen beladen ist. Es kann angenommen werden, daß die unbeladene Kunststoffkomponente, z.B. Polyol, über die Zuführungsleitung 16 und die andere, beladene Kunststoffkomponente, z.B. Isocyanat, über die Zuführungsleitung 17 zugeführt wird.

In der oberen Endstellung des Steuerkolbens 34 treten die Kunststoffkomponenten unter hohem Druck in die Mischkammer 43 ein und vermischen sich auf Grund der großen Eintrittsgeschwindigkeit und des dadurch verursachten Aufeinanderstoßens miteinander. Das Gemisch tritt durch die Austrittsöffnung 51 aus der Mischkammer 43 aus und gelangt dann in den Hohlraum einer nicht dargestellten Form, wo das Gemisch zu einem festen Kunststoff ausreagiert.

Da die Kunststoffkomponenten, sofern sie miteinander in Berührung kommen, auf diese Weise reagieren, ist es erforderlich, daß die einzelnen Kunststoffkomponenten, während der Nichtmischphase, also in der gezeigten unteren Endlage des Steuerkolbens 34, auf keinen Fall miteinander in Berührung kommen. Daher ist die Frage der Dichtung zwischen den beiden Überströmkanälen 49 und 50 von besonderer Bedeutung.

Wie insbesondere Fig. 1 deutlich zeigt, befinden sich radial außerhalb der Büchse 32 im Bereich der Überströmkanäle 49 und 50 zwei knapp halbringartige Räume 39 und 40, die über Druckleitungen 41 und 42 an eine Druckquelle angeschlossen werden können und dabei die Büchse 32 radial nach innen zu verformen versuchen, wodurch eine gegenüber der auf Grund der Passung zwischen dem Steuerkolben 34 und der Innenwandung der Büchse 32 bereits vorhandenen Dichtung erhöhte Dichtwirkung zwischen den Überströmkanälen 49 und 50 erreichbar ist.

Dabei ist es möglich, den Druck auf die Büchse 32 lediglich in der in Fig. 1 gezeigten Stellung des Steuerkolbens 34, nämlich in der Nichtmischphase (Rückführungsstellung), aufzubringen, d.h., den Steuerkolben 34 ohne zusätzlichen Dichtdruck von der einen in die andere Endstellung zu bewegen. Hierdurch kann der Verschleiß herabgesetzt und Bewegungsenergie gespart werden.

## Patentansprüche

1. Mischkopf zum Erzeugen eines vorzugsweise chemisch reaktionsfähigen Gemisches aus mindestens zwei Kunststoffkomponenten, mit einer Mischkammer (43), die Eintrittsöffnungen (44, 45) für die einzelnen Kunststoffkomponenten und eine Austrittsöffnung (51) für das Gemisch besitzt, mit einem in der Mischkammer angeordneten, in einer Gehäusebohrung (30) geführten, Überströmkanäle (49, 50) aufweisenden Steuerkolben (34), der aus einer die Eintrittsöffnungen offenlassenden Stellung (Mischphase) bis in den Bereich der Austirttsöffnung, dabei die Eintrittsöffnungen gegenüber der Mischkammer absperrend (Nichtmischphase), jedoch gleichzeitig die Eintrittsöffnungen über die Überströmkanäle mit Rückführleitungen (53, 54) für die einzelnen Kunststoffkomponenten verbindend, hin- und herbewegbar ist, gekennzeichnet durch eine im Mischkopfgehäuse (31) eingesetzte, den Steuerkolben (34) führende elastische Büchse (32) und dadurch, daß das Mischkopfgehäuse im Bereich des Außenumfanges der Büchse einen oder mehrere Druckräume (39, 40) aufweist, in denen ein gegen die Büchse anstehender Druck eines Mediums aufbaubar ist, wodurch der Innendurchmesser der Büchse derart veränderbar ist, daß sich zwischen der Büchse und dem Steuerkolben (34) ein besonders dichter Sitz ergibt.

2. Mischkopf nach Anspruch 1, gekennzeichnet durch die Anordnung der Druckräume (39, 40) lediglich im Bereich zwischen den Überströmkanälen (49, 50).

3. Mischkopf nach Anspruch 2, gekennzeichnet durch die Ausbildung der Büchse (32) als dünnwandige Metallbüchse.

4. Mischkopf nach einem der Ansprüche 1 bis 3, gekennzeichnet durch eine Steuerung des Druckes im Druckraum (39, 40) nach Höhe und oder Zeit, insbesondere derart, daß der Druck im Druckraum lediglich in derjenigen Stellung des Steuerkolbens (34) aufgebracht wird, in der die Eintrittsöffnungen (44, 45) gegenüber der Mischkammer (43) abgesperrt sind.

## Claims

1. A mixing head for producing a more specially chemically reactive mixture of at least two synthetic resin components, with a mixing space (43) having inlet ports (44, 45) for said separate synthetic resin components and an outlet port (51) for said mixture, with a valve plunger (34) which is placed in said mixing space, is guided in a hole (30) in said housing and has connection passages (49, 50), said plunger being able to be moved backwards and forwards out of a mixing stage position uncovering the inlet ports and as far as the outlet port so that the inlet ports are shut off from the mixing space in a non-mixing stage, while at the same time the inlet ports are joined up by way of the connection passages with return passages (53, 54) for the separate synthetic resin components, characterized in that an elastic liner (32) is placed in the mixing head housing (31) for guiding the valve plunger (34) and in that at the outer face of the liner the mixing head housing has one or more pressure spaces (39, 40), in which a fluid pressure, acting against the liner, may be produced so that the inner diameter of the liner may be so changed that a specially close fit is produced between the liner and the valve plunger (34).

2. A mixing head as claimed in claim 1, characterized in that the pressure spaces (39, 40) are only placed in a part between the connection passages (49, 50).

3. A mixing head as claimed in claim 2, characterized in that the liner (32) is a thin-walled metal liner.

4. A mixing head as claimed in anyone of claims 1 to 3, characterized by such a timing and/or level control of the pressure in the pressure space (39) that, more specifically, the pressure space is only put under pressure at that position of the plunger (34) at which the inlet ports (44, 45) are shut off from the mixing space (43).

**Revendications**

1. Tête de mélange qui est destinée à former un mélange d'au moins deux composants de matière plastique, capables de préférence de réagir chimiquement, et qui comprend une chambre de mélange (43) comportant des ouvertures d'entrée (44, 45) de chacun de ces composants et une ouverture (51) de sortie du mélange, cette chambre contenant un piston de commande (34) qui coulisse dans un alésage (30) du corps (31), comporte des canaux de décharge (49, 50) et peut aller et venir d'une position, dans laquelle il dégage ces ouvertures d'entrée (phase de mélange), à une position adjacente à l'ouverture de sortie, dans laquelle il isole ces ouvertures d'entrée de la chambre de mélange (phase sans mélange), mais fait simultanément communiquer lesdites ouvertures d'entrée avec des conduits (53, 54) de renvoi de chacun des composants de la matière plastique par l'intermédiaire des canaux de décharge, cette tête de mélange étant caractérisée en ce qu'elle comporte une chemise élastique (32) insérée dans le corps (31) de cette tête et guidant le piston de commande (34) et en ce que ce corps comporte à la périphérie de cette chemise au moins une chambre de pression (39, 40) dans laquelle il est possible d'augmenter la pression d'un fluide s'exerçant sur ladite chemise, ce qui permet de modifier le diamètre intérieur de cette dernière et d'obtenir entre elle et le piston de commande (34) un contact particulièrement étanche.

2. Tête de mélange selon la revendication 1, caractérisée en ce que les chambres de pression (39, 40) sont disposées uniquement entre les canaux de décharge (49, 50).

3. Tête de mélange selon la revendication 2, caractérisée en ce que la chemise (32) est constituée d'un manchon métallique à paroi mince.

4. Tête de mélange selon l'une quelconque des revendications précédentes, caractérisée en ce que la pression dans les chambres (39, 40) est commandée en valeur et éventuellement en temps de façon qu'elle ne s'exerce dans lesdites chambres que lorsque le piston de commande (34) occupe la position dans laquelle les ouvertures d'entrée (44, 45) sont isolées de la chambre de mélange (43).

Fig. 1

Fig. 2